# EUROPÄISCHE PATENTANMELDUNG

(11) **EP 2 754 680 A1**
(43) Veröffentlichungstag der Anmeldung: **16.07.2014**
(21) Anmeldenummer: 14160773.9
(22) Anmeldetag: 04.12.2007
(51) Int. Cl.: C08G 18/08, C08G 18/36, C08G 18/76, C09J 175/04, C04B 26/16, C08G 18/32, C04B 111/00, C04B 111/60

(54) **Fließfähiger 2-Komponenten-Polyurethanklebstoff zur Herstellung wasserdurchlässiger Steinverbundformkörper**

(30) Priorität: 14.03.2007 DE 102007012973
(62) Teilanmeldung aus: 07847767.6
(71) Anmelder: Henkel AG & Co. KGaA, 40191 Düsseldorf (DE)
(72) Erfinder: Kohlstadt, Hans-Peter, 42549 Velbert (DE); Thiele, Lothar, 40764 Langenfeld (DE)

(57) **Zusammenfassung**

Fließfähiger 2-Komponenten-Polyurethanklebstoff, insbesondere zur Herstellung wasserdurchlässiger Steinverbundformkörper, bestehend aus einer Komponente B1, enthaltend
- 10 bis 98 Gew.-% bezogen auf B1 mindestens eines oleochemischen Polyols,
- 1 bis 50 Gew.-% mindestens eines Diols mit einem Molekulargewicht von 60 bis 2000 g/mol,
- 1 bis 10 Gew.-% mindestens eines drei, vier oder fünfwertigen Polyols mit einem Molekulargewicht von 90 bis 750 g/mol,
- 1 bis 20 Gew.-% eines trocknenden Öles, sowie
- 0 bis 75 Gew.-% von weiteren Hilfsstoffen,

und einer Komponente B2 aus mindestens einem Polyisocyanat, wobei das NCO/OH-Verhältnis der Komponente B2 zu der Komponente B1 zwischen 1,0 :1 bis 2,0:1 beträgt.

## Beschreibung

Die Erfindung betrifft Steinverbundwerkstoffe aus reaktiven Polyurethanklebstoffen oder Polyurethanvergussmassen zusammen mit mineralischen Füllstoffen, die stabile Platten oder Formkörper bilden und sich durch eine hohe Wasserdurchlässigkeit auszeichnen. Diese können industriell hergestellt werden oder sie können vor Ort auch unter üblichen Umgebungsbedingungen hergestellt werden.

Polyurethan-Klebstoffe zum Verleben von verschiedenen Substraten sind bekannt. So werden in der DE 44 01 572 A1 zweikomponentige Polyurethan-Klebstoffe auf der Basis einer Isocyanat-Komponente und einer Polyol-Komponente beschrieben, die neben einem oleochemischen Polyol mindestens einen di- und/oder trifunktionellen Alkohol enthalten und wobei die OH-Zahl der Alkohole oder deren Gemische 1 100 bis 1 850 beträgt. Diese Zusammensetzungen können zum Verkleben von starren oder flexiblen Substraten verwendet werden, insbesondere von Kunststoffen, Metallen, Glas oder Holz.

Weiterhin ist die EP 1 366 132 A1 bekannt. Es werden dort 2K-PU-Klebstoffe beschrieben, die in der Polyolkomponente verschiedene Harze gelöst enthalten. Es werden außer den bevorzugten Holzwerkstoffen auch andere Substrate gelistet, unter anderem auch Glas, Metall oder Kunststoff. Eine Auswahl der Harze und der Verklebungsbedingungen wird nicht erwähnt.

Weiterhin ist die EP 1 131 386 A1 bekannt, in der Steinverbundplatten beschrieben werden, die aus mineralischen Formkörpern bestehen, an die Polyurethanschäume angeformt werden. Es können dem Schaummaterial bis zu 80% Füllstoffe, wie Steinmehl, Sand, Holzspäne, zugefügt werden. Die Massen enthalten weiterhin Zusätze, die ein Aufschäumen der unvernetzten PU-Masse bei der Aushärtung sicherstellen.

Ausgehend von diesem Stand der Technik ergibt sich die Aufgabe, Formkörper aus granulierten Substraten und Polyurethanzusammensetzungen herzustellen, wobei die Formkörper eine hohe mechanische Festigkeit aufweisen sollen und gleichzeitig eine hohe Durchlässigkeit für Wasser zeigen.

Die erfindungsgemäße Lösung ist den Patentansprüchen zu entnehmen. Es werden Formkörper hergestellt aus mineralischen oder Kunststoff-haltigen Granulaten (A) und 2-Komponenten-Polyurethan-Klebstoffen (B), wobei der Anteil an Granulaten mit einer durchschnittlichen Korngröße von 0,5 bis 100 mm 99 bis 65 Gew.-% beträgt und 1 bis 35 Gew.-% eines 2- Komponenten-Polyurethan-Klebstoffs enthalten sind, wobei der 2K-PU-Klebstoff aus einer Polyolkomponente (B1) besteht, aus 10 bis 98 Gew.-% bezogen auf die Polyolkomponente mindestens eines oleochemischen Polyols, 1 bis 50 Gew.-% mindestens eines Diols mit einem Molekulargewicht von 60 bis 2000 g/mol, 1 bis 10 Gew.-% mindestens eines drei, vier oder fünfwertigen Polyols mit einem Molekulargewicht von 90 bis 750 g/mol, sowie 0 bis 75 Gew.-% von weiteren Hilfsstoffen, und einer Isocyanatkomponente (B2) aus mindestens einem Polyisocyanat, wobei das NCO/OH-Verhältnis der Polyisocyanate zu den Polyolen zwischen 1,0 bis 2,0:1 beträgt.

Ein weiterer Gegenstand der Erfindung ist ein Verfahren zum Herstellen von Formkörpern aus Granulaten und einem 2K-PU-Klebstoff, wobei die Mischung maschinell oder vor Ort geformt und ausgehärtet wird.
Ein weiterer Gegenstand der Erfindung ist eine 2K-PU-Zusammensetzung, die als Klebstoff in solchen Formkörpern eingesetzt werden kann.

Ein Bestandteil, aus dem die erfindungsgemäßen Formkörper bestehen, sind Granulate (A) aus Kunststoffen oder mineralischen Materialien. Diese Granulate bestehen aus den bekannten grobkörnigen Mineralien, beispielsweise Stein, Kies, Schotter, Grobsand, Splitt, Keramik, Glas oder aus Kunststoffgranulaten. Die Korngrößenverteilung der Granulate kann zwischen 0,5 bis 100 mm im Mittelwert bestehen, insbesondere zwischen 1 bis 50 mm. Dabei ist darauf zu achten, dass die Abweichung von der mittlere Korngrößenverteilung der Granulate nicht zu groß ist. Beispiele für übliche Korngrößen der Granulate sind zwischen 1 bis 3 mm, 8 bis 12 mm, 20 bis 28 mm, 30 bis 45 mm. Die Untergrenze soll im Allgemeinen mindestens 30% der Obergrenze betragen. Es ist erfindungsgemäß möglich, aber weniger vorteilhaft, wenn große Korngrößen, die ein entsprechendes hohes Zwischenkornvolumen aufweisen, mit feinen Granulaten gemischt werden. Es ist zweckmäßig, wenn das Stauvolumen des vernetzten fertigen Formkörpers zwischen 20 bis 70 % beträgt, d.h. der fertige Formkörper soll eine Vielzahl von Hohlräumen aufweisen. Unter Stauvolumen soll das Volumen der Wasseraufnahme eines Formkörpers verstanden werden, das dieser in seine Hohlräume aufnehmen kann.

Als Granulate können handelsübliche Mischungen eingesetzt werden, insbesondere Kies, Split, Schotter oder Grobsand. Es ist jedoch auch möglich eine farbliche Auswahl zu treffen, so dass eine besondere farbliche Gestaltung der Oberfläche möglich ist, beispielsweise aus Glas oder Keramik, gefärbten Kunststoffgranulaten oder farbigen Steinmaterialien. Eine entsprechende Anpassung kann auch in der Farbe des 2K-PU-Klebstoffs vorgenommen werden.

Die Polyolkomponente B1 besteht aus einem Gemisch von an sich bekannten Diund höherfunktionellen Polyolen. Erfindungsgemäß muss ein oleochemisches Polyol enthalten sein.

Unter oleochemischen Polyolen versteht man Polyole auf Basis natürlicher Öle und Fette, z.B. die Reaktionsprodukte von epoxidierten Fettstoffen mit mono-, dioder polyfunktionellen Alkoholen oder Glycerinester langkettiger Fettsäuren, die zumindest teilweise mit Hydroxylgruppen substituiert sind.

Beispiele für solche Verbindungen sind Ringöffnungsprodukte epoxidierter Triglyceride, also epoxidierter Fettsäureglycerinester, bei denen die Ringöffnung unter Erhalt der Esterbindungen ausgeführt worden ist. Zur Herstellung der Ringöffnungsprodukte kann man von einer Vielzahl epoxidierter Triglyceride pflanzlichen oder tierischen Ursprungs ausgehen. So sind beispielsweise epoxidierte Triglyceride geeignet, die 2 bis 10 Gewichtsprozent Epoxidsauerstoff aufweisen. Derartige Produkte sind durch Epoxidierung der Doppelbindungen aus einer Reihe von Fetten und Ölen herstellbar, insbesondere epoxidierte Triglyceride.

Als Alkohole für die Ringöffnung der epoxidierten Triglyceride können Methanol, Ethanol, Propanol, Isopropanol, Butanol, Hexanol, 2-Ethylhexanol, Fettalkohole mit 6 bis 22 C-Atomen, Cyclohexanol, Benzylalkohol, 1,2-Ethanol, 1,2-Propandiol, 1,3-Propandiol, 1,4-Butandiol. 1,6-Hexandiol, Neopentylglykol, Trimethylolpropan, Glycerin, Trimethylolethan, Pentaerythrit, Sorbit sowie ethergruppenhaltige Hydroxyverbindungen wie Alkylglykole oder oligomere Glykole sowie oligomere Glycerine eingesetzt werden.

Die Ringöffnungsreaktion epoxidierter Fettsäureester oder Triglyceride mit einem Alkohol kann gegebenenfalls von einer Umesterung mit sich selber oder anderen, nachträglich zugefügten Triglyceriden gefolgt sein. Solche oleochemischen Polyole sind z.B. in der deutschen Patentanmeldung DE-A1 41 28 649 beschrieben.

Eine weitere Gruppe der oleochemischen Polyole sind Ringöffnungs- und Umesterungsprodukte von epoxidierten Fettsäureestern niederer Alkohole, also von epoxidierten Fettsäuremethyl-, -ethyl-, -propyl- oder -butylestern. Bevorzugt sind hier die Ringöffnungs- oder Umesterungsprodukte mit Alkoholen der Funktionalität 2 bis 4, insbesondere die Umsetzungsprodukte mit Ethylenglykol, Propylenglykol, oligomeren Ethylenglykolen, oligomeren Propylenglykolen, Glycerin, Trimethylolpropan oder Pentaerythrit. Die Herstellung derartiger Produkte kann nach bekannten Epoxidations- oder Ringöffnungsverfahren erfolgen, wobei die Umesterung während oder nach dem Ringöffnungsschritt durch Entfernen des niederen Alkohols aus dem Reaktionsgleichgewicht durchgeführt werden kann.

Ebenfalls zu den oleochemischen Polyolen zählen die Umsetzungsprodukte epoxidierter Fettalkohole mit C2-C8-Alkoholen der Funktionalität 1 bis 10, insbesondere 2 bis 4.

Im Rahmen der Erfindung ist auch die Verwendung von oleochemischen Polyolen möglich, die über die Umesterung von di- oder polyfunktionellen Alkoholen wie z.B. dem Additionsprodukt von Ethylenoxid oder Propylenoxid an Glycerin mit Triglyceriden zugänglich sind.

Diese oleochemischen Polyole können Hydroxylzahlen von 50 bis 400, bevorzugt 100 bis 300 aufweisen.

Besonders bevorzugt ist die Verwendung von Rizinusöl und Dimerdiolen als oleochemische Polyole sowie die Polyesterpolyole, die durch vollständige Ringöffnung von epoxidierten Triglyceriden eines wenigstens teilweise olefinisch ungesättigten Fettsäure-enthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden.

Als Diol können einzelne Substanzen und Gemische eingesetzt werden. Es handelt sich dabei um Diole mit einem Molekulargewicht zwischen 60 bis 2000 g/mol. Zu der Gruppe der niedermolekularen Diole zählen insbesondere Alkandiole mit 2 bis 6 C-Atomen, wobei das Alkan linear, verzweigt oder cyclisch sein kann. Beispiele dafür sind 1,2-Propandiol, 1,3-Propandiol, 2,3-Butandiol, 1,4-Butandiol, Diethylenglykol, Dipropylenglykol, Tripropylenglykol, Hexandiol, Cyclohexandiol, Octandiole oder höhere homologe Diole. Diese haben üblicherweise ein Molekulargewicht bis zu 400 g/mol.

Außer diesen niedermolekularen Diolen können auch die für die PU-Herstellung üblichen höhermolekularen Diole in einer Menge von 0 bis 70 Gew.-%, bezogen auf die Polyol-Komponente insgesamt, eingesetzt werden, insbesondere 0 bis 50 Gew.-%. Als höhermolekulare Polyole eignen sich vorzugsweise flüssige Polyhydroxyverbindungen mit zwei OH-Gruppen pro Polyether- und/oder Polyester-Molekül, wie z.B. difunktionelle Polypropylenglykole. Es können auch statistische und/oder Blockcopolymere des Ethylenoxids und Propylenoxids eingesetzt werden. Eine weitere Gruppe von vorzugsweise einzusetzenden Polyetherpolyolen sind die Polytetramethylenglykole, die z.B. durch die saure Polymerisation von Tetrahydrofuran hergestellt werden. Dabei liegt der Molekulargewichtsbereich solcher Polyetherglykole zwischen 400 und 4000 g/mol, vorzugsweise im Bereich bis 2000 g/mol.

Weiterhin sind als Polyole die flüssigen Polyester geeignet, die durch Kondensation von Di- bzw. Tricarbonsäuren, wie z.B. Adipinsäure, Sebazinsäure und Glutarsäure, mit niedermolekularen Diolen bzw. Triolen, wie z.B. Etylenglykol, Propylenglykol, Diethylenglykol, Triethylenglykol, Dipropylenglykol, 1,4-Butandiol, 1,6-Hexandiol, Glycerin oder Trimethylolpropan, hergestellt werden können.
Eine weitere Gruppe solcher einzusetzenden Polyole sind die Polyester auf der Basis von ε-Caprolacton, auch Polycaprolactone genannt, sowie Polycarbonatpolyole. Das Molekulargewicht solcher Polyesterpolyole soll zwischen 400 bis zu 2000 g/mol betragen (Molekulargewicht wie durch GPC messbar).

Weiterhin muss der erfindungsgemäß einsetzbare Klebstoff mindestens ein dreioder höherfunktionelles Polyol enthalten. Über die Menge kann die Vernetzungsdichte des Klebstoffs beeinflusst werden. Als drei- oder höherfunktionelle Polyole sind niedermolekulare Polyole oder deren Gemisch geeignet. Das Molekulargewicht soll zwischen 90 bis 750 g/mol betragen, insbesondere bis zu 400 g/mol. Besonders bevorzugt sind Polyole mit 3, 4 oder 5 OH-Gruppen wie Glycerin, Triethanolamin, Pentaerythrit, propoxyliertes oder ethoxyliertes Ethylendiamin, Trimethylolpropan, Trimethylolethan, Neopentylalkohol oder Additionsprodukte von Ethylenoxid an Glycerin oder Trimethylolpropan. Insbesondere sind bevorzugt Polyole mit 4 OH-Gruppen. Die Menge soll zwischen 1 bis 10 Gew.-% bezogen auf die Polyolkomponente betragen.

Bevorzugt kann die Polyol-Komponente B1 zusätzlich ein Harz enthalten. Dabei handelt es sich um flüssige bis feste organische Produkte, für die eine mehr oder weniger breite Verteilung der relativen Molmasse charakteristisch ist. Sie weisen meistens eine amorphe Struktur auf. Es ist vorteilhaft, wenn die Harze bei 20 °C in der Polyol-Komponente homogene, d.h. schlierenfreie Lösungen bilden. Es können die bekannten Harze verwendet werden, natürlichen oder synthetischen Ursprungs. Die natürlichen Harze können sowohl tierischer als auch pflanzlicher Herkunft sein. Beispiele dafür sind Schellack und Kolophoniumharze, wie Tallharze, Balsamharze oder Wurzelharze. Nicht nur die nativen natürlichen Harze, sondern auch deren Derivate sind geeignet, wie dimerisierte, hydrierte, veresterte oder neutralisierte Harze.

Die synthetischen Harze werden im allgemeinen durch Polymerisation oder Polykondensation gewonnen. Beispiele dafür sind Kohlenwasserstoff-, Terpen-, Cumaron/Inden-, Furan-, Alkyd-, Aldehyd-, Keton-, Keton/Aldehyd-, Phenol-, Glycerinester-, Polyester-, Epoxid-, Harnstoff-, Melamin-, Polyamid- und Isocyanat-Harze. Bevorzugt sind dabei Kohlenwasserstoff-, Terpen-, Alkyd-, Cumaron/Inden-, Furan-, Aldehyd- und Keton-Harz sowie Glycerinester-Harze. Die Menge der Harze kann bis zu 60 % bezogen auf B1 betragen, insbesondere zwischen 2,5 bis 40 %.

Als Komponente B2 sind Polyisocyanate einzusetzen. Diese werden getrennt von der Polyol-Komponente gelagert und erst unmittelbar vor der Verklebung mit der OH-Komponente gemischt.

Als Polyisocyanate sind die bekannten Di- und Polyisocyanate einsetzbar. Vorzugsweise enthalten die geeigneten Isocyanate im Mittel 2 bis höchstens 5, insbesondere 2 bis 3 NCO-Gruppen. Beispiele für solche Isocyanate sind 1,5-Naphthylendiisocyanat, 2,4'- und 4,4'-Diphenylmethandiisocyanat (MDI), hydriertes MDI (H12MDI), Xylylendiisocyanat (XDI), m- und p-Tetramethylxylylendiisocyanat (TMXDI), 4,4'-Diphenyldimethylmethandiisocyanat, Di- und Tetraalkyldiphenylmethandiisocyanat, 4,4'-Dibenzyldiisocyanat, 1,3-Phenylendiisocyanat, 1,4-Phenylendiisocyanat, Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethyl-cyclohexan (IPDI), IPDI-Uretdion, 4,4'-Diisocyanatophenylperfluorethan, Tetramethoxybutan-1,4-diisocyanat, Butan-1,4-diisocyanat, Hexan-1,6-diisocyanat (HDI), HDI-Biuret oder -Uretdion, HDI-Isocyanurat, Dicyclohexylmethandiisocyanat, Cyclohexan-1,4-diisocyanat, Ethylen-diisocyanat, Phthalsäure-bis-isocyanatoethylester, Trimethylhexamethylendiisocyanat, 1,4-Diisocyanatbutan, 1,12-Diisocyanatododecan und Dimerfettsäure-diisocyanat. Weiterhin können anteilsweise Dimerfettsäureisocyanate enthalten sein mit zwei und weniger als drei Isocyanatgruppen pro Molekül Dimerfettsäure.

Im allgemeinen werden aromatische Isocyanate bevorzugt, ebenso oligomerisierte NCO-endständige Addukte solcher Isocyanate, sowie Umsetzungsprodukte aus niedermolekularen Polyolen, Polyaminen oder Aminoalkoholen mit den genannten Diisocyanaten. Solche Isocyanate sind kommerziell erhältlich beispielsweise als sogenanntes "Roh-MDI", reine Isomere oder Isomerengemische des 2,4'-/4,4'-MDI, das mit Carbodiimid verflüssigte MDI oder Umsetzungsprodukte aus TDI mit niedermolekularen Polyolen. Es ist auch möglich aliphatische Isocyanate einzusetzen. Wenn diese aliphatischen Isocyanate als Komponente B2 eingesetzt werden, ist die UV-Stabilität der vernetzten Polymere erhöht. In dieser Ausführungsform ist es dann im Allgemeinen bevorzugt, einen Katalysator in der Polyolmischung einzusetzen.

Das Verhältnis der Isocyanatgruppen zu den OH-Gruppen der Polyolkomponente liegt im Bereich 1,0:1 bis 2,0:1. Ein geringer Überschuss von Isocyanatgruppen ist bevorzugt, insbesondere liegt das Verhältnis zwischen 1,02:1 bis 1,8:1.

In einer weiteren bevorzugten Ausführungsform können die erfindungsgemäßen Zusammensetzungen auch 1 bis 20 Gew.-% trocknende und/oder halbtrocknende Öle enthalten. Unter trocknenden Ölen sind beispielsweise Ester des Glycerins mit mehr als 20 % ungesättigten Fettsäuren zu verstehen, insbesondere mehrfach ungesättigten Fettsäuren, wie Linolsäure oder Linolensäure. Beispiele für solche trocknenden oder halbtrocknenden Öle sind Baumwollöl, Holzöl, Hanföl, Leinöl, Mohnöl, Rapsöl, Oiticicaöl, Perillaöl, Sojaöl, Safloröl, Sonnenblumenöl oder Walnussöl. Weiterhin sind auch flüssige Tallöle oder Terpentinöle geeignet. Es handelt sich dabei im allgemeinen um Naturstoffe, die jedoch durch chemische Reaktionen modifiziert werden können. Die Doppelbindungen können nicht konjugiert sein oder es kann sich um konjugierte Doppelbindungen halten. Die Jodzahl der trocknenden oder halbtrocknenden Öle soll zwischen 100 bis 250 betragen.

Durch die zugesetzten trocknenden und/oder halbtrocknenden Öle erhöht sich im Allgemeinen die Flexibilität des vernetzten Klebstoffs. Weiterhin kann die Viskosität durch Zusatz der niedrigviskosen entsprechenden Öle beeinflusst werden. Sind solche Öle enthalten, ist es zweckmäßig ggf. trocknende Katalysatoren zuzusetzen, wie die bekannten metallhaltigen Sikkative.

Die erfindungsgemäßen 2-Komponenten-Polyurethan-Klebstoffe können weiterhin Hilfsstoffe enthalten, die vorzugsweise ganz oder teilweise der Polyolkomponente zugemischt werden. Darunter werden Stoffe verstanden, die in der Regel zugesetzt werden, um die Eigenschaften der wesentlichen Komponenten in gewünschter Richtung zu verändern, z.B. deren Verarbeitbarkeit, Lagerfähigkeit und auch Gebrauchseigenschaften dem konkreten Anwendungsgebiet anzupassen. Beispiele dafür sind fein verteilte Füllstoffe, Verlaufmittel, Entlüfter, Thixotropiermittel, Katalysatoren, Harze, Alterungsschutzmittel, UV-Stabilisatoren, Farbstoffe, Lösemittel und Netzmittel.

Als Füllstoffe geeignet sind gegenüber Isocyanaten nicht reaktive anorganische Verbindungen wie Kreide, beschichtete Kreide, Kalkmehl, Calcium-Magnesium-Carbonate, Aluminiumoxide und -hydroxide, gefällte Kieselsäure, Zeolithe, Bentonite, Glas, Hohlkugeln, gemahlene Mineralien, soweit diese als Pulver vorliegen, d.h. eine Korngröße zwischen 1 bis 200 µm aufweisen, insbesondere zwischen 3 bis 50 µm. Solche Füllstoffe liegen nach dem Mischen in dem 2K-PU-Klebstoff dispergiert vor.

Weiterhin können Verlaufmittel, Haftvermittler, Weichmacher und/oder Stabilisatoren oder Lichtschutzmittel enthalten sein. Eine wichtige Klasse von Additiven sind Farbstoffe oder Pigmente, diese können dem Klebstoffkörper zur Farbgebung zugesetzt werden. Lösemittel können zugesetzt werden, bevorzugt sind die Klebstoffe jedoch lösemittelfrei.

Die erfindungsgemäßen 2K-PU-Klebstoffe können bei Raumtemperatur direkt miteinander reagieren. Zur Beschleunigung der Reaktion, auch bei niedrigen Temperaturen, können jedoch auch Katalysatoren enthalten sein. Es handelt sich dabei um die bekannten metallorganischen Verbindungen wie Zinn(II)salze von Carbonsäuren, starke Basen wie Alkali-Hydroxide, -Alkoholate und -Phenolate, z.B. Di-n-octyl-Zinn-mercaptid, Dibutylzinn-maleat, -diacetat, -dilaurat, -dichlorid, -bisdodecyl-mercaptid, Zinn-II-acetat, -ethylhexoat und -diethylhexoat oder Bleiphenyl-ethyl-dithiocarbaminat.

Zusätzlich geeignet sind auch aliphatische tertiäre Amine insbesondere bei cyclischer Struktur. Unter den tertiären Aminen sind auch solche geeignet, die zusätzlich noch gegenüber den Isocyanaten reaktive Gruppen tragen, insbesondere Hydroxyl- und/oder Amino-Gruppen. Beispiele für solche Amine sind Dimethylmonoethanolamin, Diethylmonoethanolamin, Triethanolamin, Tripropanolamin, Trihexanolamin, Tricyclohexanolamin, Diethanolethylamin, Diethanolpropylamin, Diethanohexylamin, Diethanolphenylamin sowie deren Ethoxylierungs- und Propoxylierungs-Produkte, Diaza-bicyclo-octan (Dabco), Triethylamin, Dimethylbenzylamin, Bis-dimethylaminoethylether, Tetramethylguanidin, Bis-dimethylaminomethylphenol, 2,2'-Dimorpholinodiethylether, Bis(2-dimethylaminoethyl)ether, N,N-Dimethylpiperazin, N-(2-hydroxyethoxyethyl)-2-azanorborane und N,N,N,N-Tetramethylhexan-1,6-diamin.

Die Katalysatoren können in Mengen zwischen 0,01 bis 3 Gew.-% insbesondere zwischen 0,1 bis 2 Gew.-% bezogen auf den Klebstoff enthalten sein. Insbesondere sind sie bei der Verwendung von aliphatischen Isocyanaten zweckmäßig.

Zur Herstellung des erfindungsgemäßen 2K-PU-Klebstoffes wird zunächst die Polyolkomponente B1 hergestellt. Dazu wird falls erforderlich zunächst eine homogene Lösung des Harzes in einem bzw. in allen Polyolen hergestellt, indem man gegebenenfalls die Mischung unter Rühren bis auf 100 °C aufwärmt. Gegebenenfalls kann es zweckmäßig sein, der Polyolmischung Anteile an Molekularsieb zuzusetzen, um eine gute Trocknung der Mischung zu erhalten. Anschließend werden die Hilfsstoffe zugemischt. Die Hilfsstoffe können auch ganz oder teilweise der Isocyanat-Komponente zugemischt werden, wenn diese nicht mit den NCO-Gruppen reagieren. Diese zwei Komponenten werden üblicherweise bis zu ihrer Anwendung getrennt gelagert. Zur Anwendung werden diese beiden Komponenten in an sich bekannter Weise miteinander gemischt und dann mit den zu verklebenden Granulaten (A) auf mineralischer oder Kunststoffbasis vermischt.

Aus den Granulaten und dem 2-Komponenten Polyurethanklebstoff wird der erfindungsgemäße Formkörper hergestellt. Dabei kann zwischen 99 bis 65 Gew.-% an Granulaten eingesetzt werden zusammen mit 1 bis 35 Gew.-% des 2K-PU-Klebstoffs, wobei die Summe 100% ergeben soll. Dabei kann die Menge des PU-Klebstoffs vermindert werden, wenn der mittlere Korndurchmesser des Granulats größer ausgewählt wird. Insbesondere bei groben Granulaten, d.h. bei einer mittleren Korngröße oberhalb von 25 mm, können 1 bis 20 Gew.-% 2K-PU-Klebstoff eingesetzt werden. Werden feinere Granulate eingesetzt, beispielsweise mit einem mittleren Korngröße von bis zu 15 mm, werden üblicherweise 4 bis 25 Gew.-% des 2K-PU-Klebstoffs eingesetzt.

Ebenso ist es möglich geschichtete Formkörper herzustellen, d.h. auf eine untere Schicht von groben Granulaten kann eine zweite im Allgemeinen meist dünnere Schicht von feineren Granulaten aufgebracht werden. Ebenso ist es möglich auf eine vorliegende untere Schicht eine zweite Schicht mit farblich besonders ausgewählten, bevorzugt mineralischen Granulaten, aufzubringen.

Die erfindungsgemäßen Formkörper können industriell hergestellt werden, oder sie werden vor Ort hergestellt. Eine mögliche Verfahrensweise besteht darin, dass die Granulate gemischt werden und die entsprechende Menge des 2K-PU-Klebstoffs zudosiert wird. Nach guter Vermischung kann aus der Kleb-stoff/Granulatmischung der Formkörper hergestellt werden. Das kann in entsprechenden Formen durchgeführt werden. Wenn besonders dichte Formkörper erhalten werden sollen, ist es zweckmäßig, das Gemisch durch geeignete Verfahren zu verdichten. Solche Verfahren sind dem Fachmann allgemein bekannt, beispielsweise Rütteln oder Walzen.

Eine besondere Verfahrensweise besteht darin, dass eine Form mit einem Typ des Granulates vermischt mit dem 2K-PU-Klebstoff gefüllt wird, diese Mischung ggf. verdichtet wird, und anschließend eine zweite Mischung mit einem anders gearteten Granulat, beispielsweise eine ausgewählte Farbe oder eine andere Korngröße, überschichtet wird. Danach wird der Inhalt der Form endgültig verdichtet und kann vernetzen.

Eine weitere bevorzugte Ausführungsweise arbeitet derart, dass auf eine noch nicht vernetzte Granulat/Klebstoffmischung eine weitere Mischung eines gleichen oder unterschiedlichen Granulates mit einem zweiten 2K-PU-Klebstoff vermischt wird, wobei dieser zweite Klebstoff auf Basis eines aliphatischen Polyisocyanats hergestellt wurde. Auf diese Weise können Formkörper erhalten werden, die eine höhere Lichtstabilität an der Oberfläche aufweisen.

Eine andere Arbeitsweise stellt die erfindungsgemäßen Formkörper vor Ort her. Dabei ist es möglich, die Mischung aus Granulaten und 2K-PU-Klebstoff herzustellen, danach wird diese auf den vorgesehenen Untergrund in eine ggf. vorgesehene Form aufgebracht und verteilt. Danach kann diese Mischung beispielsweise durch Walzen verdichtet werden. Diese Verfahrensweise ist insbesondere dann geeignet, wenn der Formkörper als Bodenbelag eingesetzt werden soll, beispielsweise als Weg, Straße, Platz, Terrasse oder Fußboden.

Es ist jedoch vorteilhaft, das beim Vermischen der Füllstoff/Klebstoffmischung der 2K-PU-Klebstoff eine Viskosität zwischen 1000 bis 20000 mPas bei Applikationstemperatur aufweist, bevorzugt bei 15 bis 50°C, insbesondere zwischen 2000 bis zu 10000 mPas (gemessen nach EN ISO 2555). Ist die Viskosität zu gering, tritt bei der Verarbeitung eine Entmischung von Klebstoff und Granulat auf, so dass keine ausreichende Verklebung des gesamten Formkörpers sichergestellt ist. Dabei fließt der Klebstoff aus der Mischung nach unten, so dass oben eine schlechte Verklebung erhalten wird, während an der Unterseite sich der Klebstoff anreichert. Außerdem kann die Wasserdurchlässigkeit negativ beeinflusst werden, weil dort dann auch die Hohlräume gefüllt sind. Ist die Viskosität zu hoch, ist die Vermischung der Bestandteile nur schwer durchzuführen, und eine ausreichende Verbindung von Klebstoff und Granulat ist nicht gegeben.

Die Viskosität kann durch die Auswahl der Polyolkomponenten beeinflusst werden. Eine weitere Möglichkeit besteht darin, dass der 2K-PU-Klebstoff rheologisch wirksame Füllstoffe enthält, beispielsweise beschichtete Kreide, Aerosil oder andere fein verteilte Füllstoffe. Eine weitere Möglichkeit besteht darin, dass das Granulat und der Klebstoff auf eine geeignete Temperatur erwärmt werden. Dabei ist darauf zu achten, dass auch die Granulate eine entsprechende Applikationstemperatur aufweisen, da anderenfalls durch die geringe Menge des Klebstoffs eine zu schnelle Abkühlung des Klebstoffs erfolgen kann.

Die erfindungsgemäße Mischung aus 2K-PU-Klebstoff und Granulat kann bei verschiedenen Temperaturen ausgehärtet werden. Es hat sich gezeigt, dass Temperaturen zwischen 5°C bis zu 80°C geeignet sind. Dabei ist bei niedrigeren Temperaturen eine längere Aushärtezeit sicherzustellen, bei höheren Temperaturen geschieht die Vernetzung schneller.

Da eine ausreichende Menge Polyolkomponte B1 vorhanden ist, vernetzt der 2K-PU-Klebstoff bei erhöhter Temperatur unter trockenen Umgebungsbedingungen. Gegebenenfalls kann eine Vernetzung durch Erhöhen der relativen Luftfeuchtigkeit beschleunigt werden. Auf der anderen Seite wird das Aushärten des Formkörpers mit dem Klebstoff durch eine erhöhte Feuchtigkeit nicht negativ beeinflusst. Überraschenderweise hat sie gezeigt, dass der erfindungsgemäße Klebstoff auch mit handelsüblichen feuchten Granulaten vernetzt werden kann. Solche Granulate sind beispielsweise handelsübliche Kiese, die einen Wassergehalt zwischen 0,1 bis 5 Gew.-% aufweisen können. Diese können ohne vorherige Trocknung mit dem erfindungsgemäßen Klebstoff gemischt werden und gehärtet werden. Es findet eine gute Haftung zwischen den verschiedenen Teilchen des Substrates statt, auch die Adhäsion auf den Granulatteilchen wird nicht negativ beeinflusst. Weiterhin ist kein Aufschäumen des 2K-PU-Klebstoffs zu beobachten, so dass an der Oberfläche des vernetzten Formkörpers keine Blasen oder Schaumaggregate auftreten.

Insbesondere ist die erfindungsgemäße Zusammensetzung auch geeignet, bei nassen und feuchten Umgebungsbedingungen verarbeitet zu werden. So ist es nicht notwendig, dass im Falle eines Herstellens der Formkörper vor Ort der Untergrund getrocknet wird. Auf den feuchten Untergrund kann die Mischung beispielsweise aus mineralischem Granulat und 2K-PU-Klebstoff direkt aufgebracht werden. Nach dem Verdichten ist auch bei weiteren feuchten Umgebungsbedingungen, beispielsweise durch Nebel oder Regen, keine Beeinträchtigung der Verklebung der Formkörper festzustellen. Auch bei wechselnden Luftfeuchtigkeitsbedingungen und wechselnden Temperatur findet eine ausreichende Vernetzung statt.

Die erfindungsgemäßen Formkörper erreichen eine hohe mechanische Stabilität. Beispielsweise kann die Druckfestigkeit oberhalb von 5 N/mm² betragen, insbesondere von 8 bis 20 N/mm² (gemessen analog EN 1926). Im Falle von vor Ort hergestellten Formkörpern können diese üblicherweise nach 12 Stunden zumindest teilweise belastet werden. Sind die Temperaturbedingungen zur Aushärtung höher, beispielsweise 20 oder 25°C, kann eine entsprechende Belastung schon nach bis zu 3 Stunden erzielt werden.

Die erfindungsgemäßen Formkörper sind insbesondere als Formkörper mit einer hohen Wasserdurchlässigkeit geeignet. Darunter ist zu verstehen, dass der fertig vernetzte Formkörper Wasser an seiner Oberfläche nicht staut, sondern durch den Formkörper auf die andere Seite gelangen kann. Insbesondere soll die Wasserdurchlässigkeit eines Formkörpers von 500 bis 3000 l/m² pro min bei einer Schichtdicke von 5 cm betragen, insbesondere von 800 bis 2400 l/m² pro min.

Die erfindungsgemäßen Formkörper können verschiedene Formen haben. Beispielsweise können sie als Hohlkörper geformt sein, wie Pflanzringe oder Pflanzenschalen oder -kübel. Eine weitere Ausgestaltungsform sind plattenförmige Formkörper, die als Platten oder als Rasensteine eingesetzt werden können. Eine weitere Ausführungsform der Formkörper sind durchgehende Wege oder Straßen oder Terrassenoberflächen, die eine hohe Wasserdurchlässigkeit aufweisen. Damit kann das auftreffende Regenwasser im Untergrund versickern, die erforderliche Kanalisation zum Abführen von auftreffendem Wasser kann verringert werden. Eine weitere Ausführungsform der erfindungsgemäßen Formkörper kann in Form von verfestigten Schotterbetten für Leitungen, Rohre oder Gleise eingesetzt werden. Eine erfindungsgemäße Arbeitsweise erlaubt es, solche durchlässigen Schichten vor Ort herzustellen. Die Verfahrensweise ist weniger fehleranfällig durch die vorherrschenden Umgebungsbedingungen.

### Beispiele

### Beispiel 1 (PU-Klebstoff) :

Es wird eine Mischung hergestellt aus:

| | |
|---|---|
| Ricinusöl | 31,5 Teile |
| Trifunktionelles Polyetherpolyol (PPG M_{N} 450) | 8 |
| Dipropylenglykol | 3,2 |
| Molekularsieb | 4,3 |
| Cyclohexanon-Formaldehydharz | 10 |
| Calciumcarbonat (Pulver) | 41 |
| Aerosil R202 | 2,0 |
| Die Bestandteile werden an einem schnelllaufenden Rührer gemischt und ggf. entgast. | |
| Roh-MDI | 35,5 Teile |

Durch Mischen der Komponenten wird ein reagierender Klebstoff erhalten.

### Beispiel 2

Aus 6 % der Klebstoffmischung gemäß Beispiel 1 und 94 % eines Kiesgranulats (1 bis 3 mm) wird eine Mischung hergestellt. Die Mischung wird in eine runde Form (2 cm dick, 20 cm Durchmesser) gefüllt und verdichtet.

Die Mischung wird bei Raumtemperatur gemischt, eingefüllt und vernetzt bei üblichen Umgebungsbedingungen.

### Beispiel 3

90 % eines Kiesgranulates (1 bis 3 mm) als Mischung mit 10 % eines Klebstoffs nach Beispiel 1 werden durch Wälzen in einer Trommel hergestellt. Die Mischung wird bei 25°C gemischt und in eine Form von 2 x 5 x 20 cm eingebracht.

Die Vernetzung erfolgt bei 45 °C und 100 % Luftfeuchtigkeit.

### Beispiel 4

92 % eines wasserfeuchten Kiesgranulates (2 bis 4 mm) wird mit 8 % eines Klebstoffs nach Beispiel 1 gemischt. Der Klebstoff wird bei Raumtemperatur gemischt und in eine Form 20x5x2 cm eingebracht und verdichtet.

Eine Vernetzung findet bei 20°C statt.

### Beispiel 5

94 % eines Kiesgemisches (20 bis 27 mm) werden mit 6 % eines Klebstoffs nach Beispiel 1 gemischt. Die Mischung wird bei 30°C durchgeführt, es wird eine Form 40 x 20 x 10 cm gefüllt und verdichtet.

Die Vernetzung findet bei 20°C statt.

### Beispiel 6

Ein Formkörper gemäß Beispiel 3 wird hergestellt. Dieser Formkörper wird 30 min. nach der Herstellung für 3 Std. mit einer dünnen Wasserschicht überschichtet. Danach wird das Wasser entfernt, der Formkörper vernetzt.

Alle Formkörper sind nach 24 Std. vernetzt und fest.

Alle Formkörper weisen an der Oberfläche keine Schaumanteile auf.

Das Belastungsverhalten ist gut (größer 8 N/mm²)

Im Querschnitt zeigt sich keine Entmischung des Klebstoff/Granutat-Gemischs. Die Wasserdurchlässigkeit ist oberhalb von 500 l/ m²min.

## Patentansprüche

1. Fließfähiger 2-Komponenten-Polyurethanklebstoff bestehend aus einer Komponente B1, enthaltend
- 10 bis 98 Gew.-% bezogen auf B1 mindestens eines oleochemischen Polyols,
- 1 bis 50 Gew.-% mindestens eines Diols mit einem Molekulargewicht von 60 bis 2000 g/mol,
- 1 bis 10 Gew.-% mindestens eines drei, vier oder fünfwertigen Polyols mit einem Molekulargewicht von 90 bis 750 g/mol,
- 1 bis 20 Gew.-% eines trocknenden Öles, sowie
- 0 bis 75 Gew.-% von weiteren Hilfsstoffen,
und einer Komponente B2 aus mindestens einem Polyisocyanat,
wobei das NCO/OH-Verhältnis der Komponente B2 zu der Komponente B1 zwischen 1,0 :1 bis 2,0:1 beträgt.

2. 2-K-PU-Klebstoff nach Anspruch 1, **dadurch gekennzeichnet, dass** als Hilfsstoffe 2,5 bis 60 Gew.-% mindestens eines synthetischen oder natürlichen Harzes sowie 0,01 bis 3 Gew.-% eines Katalysators bezogen auf B1 enthalten sind.

3. 2-K-PU-Klebstoff nach Anspruch 1 oder 2, **dadurch gekennzeichnet, dass** ein als Sikkativ wirkender Bestandteil enthalten ist.

4. 2-K-PU-Klebstoff nach einem der Ansprüche 1 bis 3, **dadurch gekennzeichnet, dass** als trocknendes Öl Leinöl oder Holzöl enthalten ist.

5. 2-K-PU-Klebstoff nach einem der Ansprüche 1 bis 4, **dadurch gekennzeichnet, dass** der Klebstoff eine Viskosität von 1000 bis zu 20000mPas bei Applikationstemperatur aufweist.

6. Verwendung eines 2-K-PU-Klebstoffs nach Anspruch 1 bis 5 zur Herstellung von wasserdurchlässigen Formkörpern.
